# EUROPÄISCHE PATENTANMELDUNG

(11) **EP 4 119 787 A1**
(43) Veröffentlichungstag der Anmeldung: **18.01.2023**
(21) Anmeldenummer: 22182108.5
(22) Anmeldetag: 30.06.2022
(51) Int. Cl.: F02M 69/46, F02M 35/10, F02M 69/04, F02M 21/02, F02M 61/14

(54) **VERBRENNUNGSKRAFTMASCHINE MIT SAUGROHREINSPRITZUNG, INSBESONDERE WASSERSTOFFVERBRENNUNGSMOTOR MIT SAUGROHREINSPRITZUNG**

(30) Priorität: 12.07.2021 CH 0700402021
(71) Anmelder: Liebherr Machines Bulle SA, 1630 Bulle (CH)
(72) Erfinder: SEBA, Bouzid, 1632 Riaz (CH); PURAN, Bakir, 1696 Vuisternens-en-Ogoz (CH); FRAGNIÈRE, Olivier, 1791 Courtaman (CH)
(74) Vertreter: von Tietzen und Hennig, Nikolaus

(57) **Zusammenfassung**

Die Erfindung betrifft eine Verbrennungskraftmaschine mit Saugrohreinspritzung umfassend mindestens zwei Brennräume (2), wenigstens ein Zentralrail (10) zur Kraftstoffversorgung für die Saugrohreinspritzung und wenigstens einen Luftverteiler (30) für die Luftversorgung der einzelnen Brennräume, dadurch gekennzeichnet, dass das Zentralrail am Luftverteiler angebaut ist oder das Zentralrail und der Luftverteiler als einstückiges Bauteil ausgeführt sind.

## Beschreibung

Die Erfindung betrifft eine Verbrennungskraftmaschine mit Saugrohreinspritzung umfassend mindestens zwei Brennräume, wenigstens ein Zentralrail zur Kraftstoffversorgung für die Saugrohreinspritzung und wenigstens einen Luftverteiler für die Luftversorgung der einzelnen Brennräume.

Das Prinzip der Kraftstoff-Saugrohreinspritzung kommt nach wie vor zur Anwendung, insbesondere bei dynamisch betriebenen Gasmotoren. Auch ein solches Konzept ermöglicht eine zylinderindividuelle Kraftstoffeinspritzung, jedoch unter einem deutlich geringeren Aufwand als bei einer Direkteinspritzung. Damit die potenziellen Vorteile einer Direkteinspritzung voll ausgeschöpft werden können, muss der Kraftstoff unter einem entsprechend hohen Druckniveau bereitgestellt werden.

Wie allgemein bekannt, ist das Mitführen von gasförmigen Kraftstoffen in Hochdruckspeichern für On-board weitverbreitet. Typische Druckniveaus von in Fahrzeuganwendungen eingesetzten Hochdruckspeichern befinden sich beispielsweise bei 350 bar und 700 bar. Wird im Fall einer Direkteinspritzung ein Einspritzdruck in einer Grössenordnung von 300 bar benötigt, so kann ohne die Möglichkeit einer On-board Verdichtung ein grosser bis sehr grosser Anteil der vorhandenen Speicherkapazität nicht genutzt werden, wobei entsprechende für einen On-board Einsatz geeignete Verdichtungs-Vorrichtungen heutzutage nur schwer oder überhaupt nicht verfügbar sind.

Ferner existieren Kraftstoffe, die mit moderatem Aufwand verflüssigt und in Flüssigform gespeichert werden können. Das bekannteste Beispiel ist LPG (Liquified Petroleum Gas), welches in Deutschland besser unter dem Namen Autogas bekannt ist. Obgleich man derartige Kraftstoffe bei der Heranführung vom Kraftstoffspeicher zur Verbrennungskraftmaschine noch im flüssigen Aggregatzustand und damit unter einem vergleichsweise geringen Aufwand verdichten könnte, werden diese dem Brennraum nach wie vor vielfach mittels einer Saugrohreinspritzung zugeführt.

In Bezug auf Wasserstofffahrzeuge gewinnt die Stoffspeicherung von Wasserstoff eine zunehmende Bedeutung. Hierbei befindet sich im Kraftstoffspeicher kein molekularer Wasserstoff in Reinform, sondern ein bevorzugt flüssiges Wasserstoff-Speichermedium. Durch die Auswahl eines geeigneten Mediums lässt sich einerseits eine deutlich höhere volumetrische Energiedichte als durch eine Druckspeicherung von molekularem Wasserstoff erzielen und andererseits ist die Speicherung bei weitem nicht so aufwendig, wie eine Speicherung von molekularem Wasserstoff in Flüssigoder Kryogenform. Damit der Verbrennungskraftmaschine schliesslich molekularer Wasserstoff bereitgestellt werden kann, ist eine On-board Reformierung erforderlich. Bekannte Reformierungsprozesse funktionieren allerdings nur bedingt oder gar nicht, wenn das Wasserstoff-Speichermedium mit allzu grossem Druck dem Reformator zugeführt wird. Demzufolge kann der an einem Ausgang vom Reformator abgegebene molekulare Wasserstoff lediglich einen vergleichsweise niedrigen Druck aufweisen, weswegen eine Saugrohreinspritzung für solche Wasserstoffmotoren prädestiniert ist, die ihren Wasserstoff aus einem Wasserstoff-Speichermedium beziehen.

Aus diesem Grund ist das Prinzip der Kraftstoff-Saugrohreinspritzung, insbesondere bei dynamisch betriebenen Gasmotoren, weiterhin von Bedeutung. Verbrennungskraftmaschinen mit Saugrohreinspritzung umfassen üblicherweise einen als Rail bezeichneten Druckspeicher, dem zunächst der Kraftstoff aus dem Primärkraftstofftank zugeführt wird. Aus dem Rail wird dann der benötigte Kraftstoff an den Zentralinjektor bzw. die einzelnen Injektoren zur Einspritzung bereitgestellt. Zumeist wird für alle Brennräume der Verbrennungskraftmaschine ein gemeinsames Rail benutzt, zumindest für alle nebeneinander in einer gemeinsamen Reihe des Motors angeordneten Brennräume, welches man in diesem Fall zwecks Präzisierung als Zentralrail bezeichnet. Für den Fall einer Mehrpunkt-Saugrohreinspritzung muss pro Brennraum ein Injektor mit Kraftstoff aus dem Zentralrail versorgt werden. Mit zunehmender Zylinderanzahl steigt auch der Verohrungsaufwand zwischen dem Zentralrail mit den jeweiligen Injektoren, was nicht nur die Kosten und den Wartungsaufwand erhöht, sondern auch mehr Bauraum in Anspruch nimmt.

Die Aufgabe der vorliegenden Erfindung bestand daher darin, die Anzahl notwendiger Einzelrohrleitungen zwischen dem Zentralrail und den Injektoren einer Verbrennungskraftmaschine zu reduzieren. Ebenso ist es wünschenswert, eine einfache Austauschbarkeit der Injektoren zu ermöglichen und gleichzeitig eine Abschottung elektrischer Bereiche des Injektors vom Kraftstoffbereich sicherzustellen.

Gelöst wird diese Aufgabe durch eine Verbrennungskraftmaschine gemäß den Merkmalen des Anspruchs 1. Vorteilhafte Ausführungen sind Gegenstand der abhängigen Ansprüche.

Erfindungsgemäß wird vorgeschlagen, das Zentralrail direkt oder zumindest in unmittelbarer Nähe am Luftverteiler anzubauen. Alternativ dazu können das Zentralrail und der Luftverteiler auch durch ein gemeinsames Bauteil gebildet sein, das heißt die jeweilige Funktionsgruppe des Zentralrails und die des Luftverteilers sind zu einem einstückigen Bauteil zusammengefasst. In einer bevorzugten Ausführung handelt es dann um ein einstückiges Gussteil.

Der Kerngedanke der Erfindung besteht darin, das Zentralrail in unmittelbarer Nähe bzw. direkt am Luftverteiler anzuordnen. Etwaige Verbindungen können unmittelbar in das Zentralrail und/oder den Luftverteiler integriert sein oder durch einfache mit einer entsprechenden Abdichtung versehene Wanddurchbrüche gebildet werden, was die Anzahl an extern angeordneten Leitungsrohren maßgeblich reduzieren kann.

Die Verbrennungskraftmaschine kann mehrere Zentralrails und/oder Luftverteiler aufweisen. Beispielsweise kann im Fall eines V-Motors für jede Zylinderbank jeweils ein gemeinsam genutzter Luftverteiler und/oder jeweils ein gemeinsames Zentralrail vorgesehen sein.

Handelt es sich bei dem Zentralrail und dem Luftverteiler um separate Bauteile, können diese mittels Verschraubungen aneinander fixiert sein. Vorstellbar ist auch ein galvanisches Verbinden der beiden Bauteile.

In einer bevorzugten Ausführungsform ist ein oder sind mehrere Injektoren zumindest teilweise in das Zentralrail integriert bzw. darin eingebaut oder zumindest unmittelbar daran angebaut. Eine solche konstruktive Ausführung vereinfacht die Kraftstoffzuführung aus dem Zentralrail an die jeweiligen Injektoren. In einer besonders bevorzugten Ausführungsform kann auf jegliche sich über freiliegende Leitungen erstreckende Fluidverbindungen zwischen dem Zentralrail und den über dieses Zentralrail versorgten Injektoren verzichtet werden. Daraus resultiert ein besonders kurzer Verbindungsweg zwischen jeweils einem Injektor und dem Zentralrail, wobei dieser darüber hinaus auch deutlich sicherer gestaltet werden kann, weil hierdurch zur Installation jener Verbindungen auf externe Leitungsanordnungen verzichtet werden kann.

Sind Luftverteiler und Zentralrail als ein einstückiges Bauteil gefertigt, insbesondere als Gussteil ausgeführt, so liegen die notwendigen inneren Hohlräume zumindest innerhalb eines solchen Bauteils. Etwaige innere Verbindungen der Hohlräume von Zentralrail und Luftverteiler sowie innere Abtrennungen oder sonstige Ausnehmungen inklusive äußerer Anschlüsse sind dadurch bereits in bzw. an dem einstückigen Bauteil ausgeformt oder zumindest vorgefertigt. Die Endfertigung, d.h. das Nacharbeiten bestimmter Ausnehmungen zwecks Erreichung einer besonders hohen Maßhaltigkeit und/oder besonders hohen Oberflächengüte, das Schneiden von Gewinden, etc. bis zur Fertigstellung, erfolgen dann an diesem einstückigen Bauteil, in dem die Funktionen des Luftverteilers und des Zentralrails vereint sind.

Wie bereits vorstehend angedeutet, sind vorteilhafterweise ein oder mehrere Injektoren zumindest teilweise in das Zentralrail eingebaut. Vorstellbar ist es, dass sich ein eingebauter Injektor vollständig innerhalb des Zentralrails befindet. Bevorzugt ist jedoch eine Einbauart, bei der sich ein gewisser Bauteilabschnitt des Injektors außerhalb des Zentralrails befindet und damit von außen zugänglich ist. Besonders bevorzugt umfasst dieser freiliegende Bereich des Injektors die notwendigen Bestandteile, die eine aktuatorische Betätigung des Injektors ermöglichen. Insbesondere können das die Ventilelemente beziehungsweise die elektrischen Steuerelemente zur Ventilbetätigung sein. Insbesondere ist es sinnvoll, elektrische Aktuatorbauteile außerhalb des Zentralrails anzuordnen, um dadurch eine räumliche Trennung und Abschottung zwischen den elektrischen Bauteilen und des Kraftstoffes bzw. Kraftstoff-Luftgemisches sicherzustellen.

Ein weiterer Vorteil besteht darin, dass durch den von außen möglichen Zugang zu dem wenigstens einen Injektor Wartungs- und Reparaturarbeiten erleichtert werden.

In seiner Einbaulage steht die Längsachse des wenigstens einen Injektors vorzugsweise senkrecht zur Längsachse des Zentralrails.

Es kann zweckmäßig sein, dass ein Injektor von außerhalb des Zentralrails aus seiner Einbauposition am Zentralrail entnehmbar und einbringbar ist und hierfür keine Demontage des Zentralrails erforderlich ist. In einer vorteilhaften Ausführungsform der Erfindung ist der vollständige Injektor von außen zugänglich und entnehmbar und/oder einbaubar. Alternativ ist lediglich ein bestimmter Abschnitt des Injektors von außen zugänglich und vom restlichen Bereich des Injektors separiert entnehmbar ist, wobei in einer Ausführungsform die aktuatorischen Mechanismen des Injektors im außenliegenden Teilbereich untergebracht sind, wodurch ein Wechsel der Mechanik und/oder Elektrik eines Injektors besonders einfach und unkompliziert ist.

Die Fixierung des Injektors am Zentralrail kann beispielsweise mittels eines Fixierungselementes erfolgen, das auf der Außenseite des Zentralrails montierbar ist. Denkbar ist beispielsweise ein fest mit dem Injektor verbundenes Fixierungsmittel, insbesondere eine Haltekralle, die beim Einsetzen in das Zentralrail an der Außenwandung des Zentralrails anliegt und dort fixierbar ist, insbesondere verschraubt werden kann.

Für den Ein- und Ausbau des Injektors beziehungsweise zumindest des Injektorventils ist dadurch lediglich eine Lösung bzw. Fixierung des Fixierungsmittels notwendig.

Für die Fluidverbindung zwischen Zentralrail und Injektor kann vorgesehen sein, dass der Injektor an seinem Außenumfang eine äußere Ringnut aufweist, die nach seiner Montage innerhalb des Zentralrails liegt, insbesondere in einem kraftstoffbeinhaltenden Volumen des Zentralrails liegt. Ein oder mehrere Radialbohrungen im Nutengrund der Ringnut dienen zur Kraftstoffzuführung aus dem Zentralrail bis hin zur Injektordüse.

Die vorgeschlagene Erfindung und deren vorteilhafte Ausführungsformen sind für eine Einpunkt-Saugrohreinspritzung als auch eine Mehrpunkt-Saugrohreinspritzung nutzbar. Denkbar ist auch der Einsatz bei einer Mischform aus Einpunkt- und Mehrpunkt-Saugrohreinspritzung.

Im Falle einer Einpunkt-Saugrohreinspritzung oder der vorgenannten Mischform erstreckt sich der Injektor bevorzugt aus dem Zentralrail in den Luftverteiler hinein, wobei die Injektordüse in das Volumen des Luftverteilers mündet. Der Injektor bzw. sein Kraftstoff-Zuführungskanal durchdringt folglich die beiden aneinander liegenden Gehäusewände des Zentralrails und Luftverteilers beziehungsweise im Fall einer einstückigen Ausführung die Gemeinsame. Das Kraftstoff-Luftgemisch bildet sich im Luftverteiler, von wo aus es in die vorgesehenen Einlasskanäle der Brennräume gelangt.

Basiert das Einspritzkonzept der Verbrennungskraftmaschine stattdessen auf einer Mehrpunkteinspritzung, so erstreckt sich der Kraftstoff-Zuführungskanal eines Kraftstoffinjektors vollständig durch den Luftverteiler hindurch bis hin zum Zylinderkopf, insbesondere dem dort ausgeprägten jeweiligen Einlasskanal für die Zuführung des Kraftstoff-Luftgemisches in den betreffenden Brennraum. Ein jeweiliger in einem Injektor integrierter Kraftstoff-Zuführungspfad erstreckt sich konkret durch die beiden separaten, aneinander liegenden Gehäusewände des Zentralrails und des Luftverteilers bzw. durch deren gemeinsame Trennwand, durchdringt die gesamte Breite des Luftverteilers und mündet direkt am Zylinderkopf oder reicht bis zu einem gewissen Grad in den darin enthaltenen Einlasskanal hinein. Der Kraftstoff wird demzufolge direkt in den Einlasskanal eingespritzt, wo es zur Vermengung mit dem aus dem Luftverteiler abgegebenen Luftstrom kommt.

Das Zentralrail selbst kann einstückig ausgeführt werden. Alternativ ist auch ein mehrteiliger Aufbau vorstellbar. Denkbar ist eine Stückelung in Längsrichtung in einzelne Abschnittsteile. Wenigstens ein Abschnittsteil kann den Kraftstoffanschluss für die Anbindung an den Kraftstoffpfad bzw. den primären Kraftstoffpfad aufweisen. Gemäß vorteilhafter Ausführung kann das den Kraftstoffanschluss aufweisende Abschnittsteil mit unterschiedlicher Orientierung des Kraftstoffanschlusses mit den übrigen Abschnittsteilen verbindbar sein. Dadurch ergibt sich eine gewisse Flexibilität der Orientierung des Kraftstoffanschlusses des Zentralrails, was eine gewisse Flexibilität für die Anbausituation an der Verbrennungskraftmaschine bzw. ihres Einbaus in dem übergeordneten System z.B. einem Straßenfahrzeug oder einer mobilen Arbeitsmaschine etc. bietet.

Die Verbrennungskraftmaschine umfasst ferner eine Steuerung, die eine definierte Beeinflussung des Einspritzvorgangs ermöglicht, insbesondere die abgegebene Kraftstoffmenge und/oder den Beginn und das Ende eines jeweiligen Kraftstoff-Einspritzintervalles. Die Steuerung kann zur Ausführung eines Einpunkt-Einspritzvorgangs und/oder Mehrpunkt-Einspritzvorgangs mittels Saugrohreinspritzung konfiguriert sein. Eine bevorzugte Ausführungsform der Steuerung ermöglicht eine sequenzielle zylinderindividuelle Kraftstoffzuführung.

Als Primärkraftstoff dient bevorzugt ein gasförmiger Kraftstoff, besonders bevorzugt Wasserstoff, d.h. die Verbrennungskraftmaschine im Falle des Letzteres ein Wasserstoffmotor.

Weitere Vorteile und Eigenschaften der Erfindung sollen nachfolgend anhand eines in den Figuren dargestellten Ausführungsbeispiels näher erläutert werden. Es zeigen:
- Figur 1:: eine schematische Darstellung einer erfindungsgemäßen Verbrennungskraftmaschine,
- Figur 2:: eine Ansicht des Luftverteilers mit angebautem Zentralrail und montierten Injektoren,
- Figur 3:: den Luftverteiler der Figur 2 in einer Einzeldarstellung mit einem Blick diametral zur Anbaufläche des Luftverteilers für die Montage an der Verbrennungskraftmaschine,
- Figur 4:: eine Darstellung des Luftverteilers aus Figur 3 mit angebautem Zentralrail und teilweise montierten Injektoren,
- Figur 5:: eine Schnittdarstellung durch die erfindungsgemäße Verbrennungskraftmaschine mit angebautem Luftverteiler, Zentralrail und Injektoren,
- Figur 6:: eine vergrößerte Detaildarstellung eines Ausschnitts der Figur 5,
- Figur 7:: eine nochmals vergrößerte Darstellung des Detailausschnitts der Figur 6 und
- Figur 8:: Einzeldarstellungen eines Injektors mit Fixierungselementen.

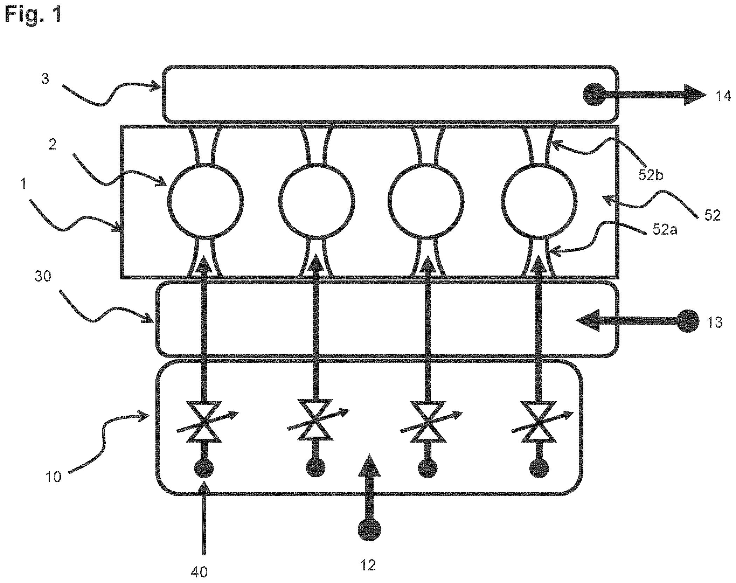

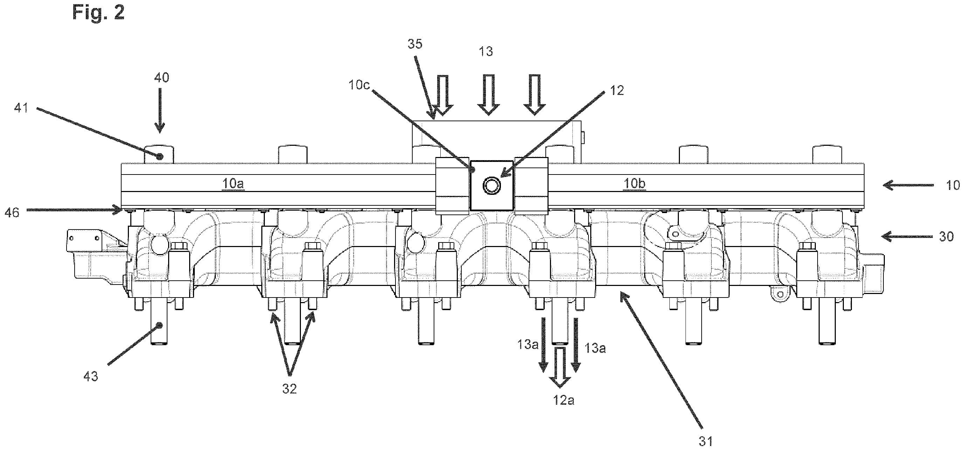

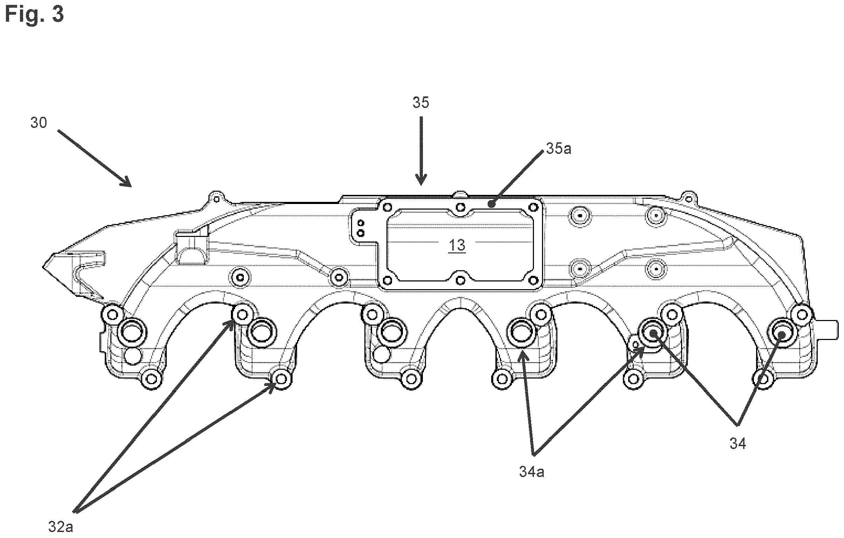

Figur 1 zeigt eine schematische Darstellung der erfindungsgemässen Verbrennungskraftmaschine. Die Figuren 2 und die Figuren 4 bis 7 zeigen ein konkretes Ausführungsbeispiel der Bauteilkomponenten Zentralrail 10, Luftverteiler 30 und Injektoren 40. Die Figur 3 beschränkt auf ein konkretes Ausführungsbeispiel eines Luftverteilers 30. Zunächst soll jedoch auf das erfindungsgemäße Prinzip anhand der schematischen Darstellung der Figur 1 näher eingegangen werden. Die dort dargestellte Verbrennungskraftmaschine weist mindestens zwei Brennräume 2 auf; dargestellt sind vier Brennräume 2. Eine erfindungsgemässe Verbrennungskraftmaschine weist mindestens zwei Brennräume 2 auf, die über einen gemeinsamen Luftverteiler 30 verfügen und deren Kraftstoffversorgung über ein gemeinsam genutztes Rail, resp. Zentralrail 10 mittels einer Saugrohreinspritzung erfolgt. (Bevorzugt verfügen sämtliche längs einer Zylinderbank 1 angeordneten Brennräume 2 über einen gemeinsamen genutzten Luftverteiler 30 und über ein gemeinsam genutztes Zentralrail 10.

Kern der Erfindung ist, dass sich das Zentralrail 10 in unmittelbarer Nähe zum Luftverteiler 30 befindet und dabei bevorzugt direkt auf dem Luftverteiler 30 montiert ist, bspw. durch Verschraubungen und/oder durch galvanisches Verbinden. Besonders bevorzugt können die beiden Funktionselemente Luftverteiler 30 und Zentralrail 10 auch als einstückiges Bauteil hergestellt sein. Im erfindungsgemäßen Ausführungsbeispiel sind die Injektoren 40 derart im Zentralrail 10 eingebaut bzw. daran angebaut, dass eine unmittelbare Kraftstoffzuführung vom Zentralrail 10 in einen Injektor 40 gegeben ist, d.h. dass eine direkte Fluidverbindung ohne ein Leitungsrohr und ohne Durchdringung eines weiteren Bauteils zwischen Rail 10 und Injektor 40 besteht. In der Darstellung gemäß Figur 1 ist noch der Abgaspfad 14 angedeutet. Das Abgas gelangt über die Auslasskanäle 52b der Brennräume 2 in den gemeinsamen Abgassammler 3. Die schematische Darstellung dieser Auslasskanäle 52b beschränkt sich auf den Zylinderkopf 52. Da es in keinem unmittelbaren Zusammenhang mit der Erfindung steht, wurde zur besseren Übersicht auf das Andeuten einer Gestaltung der Strömungspfade in dem symbolisierten Luftverteiler 30 und dem symbolisierten Abgassammler 10 verzichtet.

Für den Fall einer Vereinigung der beiden Funktionselemente Luftverteiler 30 und Zentralrail 10 zu einem einstückigen Bauteil, was einer bevorzugten Ausführungsform entspricht, könnte beispielsweise ein Rohling, vorzugsweise als Gussteil hergestellt werden, der bereits die für einen Luftverteiler 30 und die für ein Zentralrail 10 benötigten inneren Hohlräume, inneren Verbindungen, innere Abtrennungen und darüber die sonstigen Ausnehmungen inklusive der äusseren Anschlüsse aufweisen, wobei Letztere nach der Fertigstellung eines bspw. gegossenen Rohlings gegebenfalls nur in einem solchen Fertigungsstadium vorhanden sein können, welches eine Nachbearbeitung erfordert. Die Endfertigung z.B. das Nacharbeiten von Ausnehmungen und Oberflächen, die eine besonders hohe Masshaltigkeit und/oder besonders hohen Oberflächengüte benötigen, das Schneiden von Gewinden etc. bis zur Fertigstellung, würde dann an diesem Rohling bzw. Gussteil erfolgen. Sofern die beiden Funktionselemente Luftverteiler 30 und Zentralrail 10 anders als in der bevorzugten Ausführungsform als getrennte Bauteile ausgeführt sind, müssten zusätzliche Vorkehrungen getroffen werden, um deren funktionsgerechte Verbindung zu erzielen. Das betrifft die Nachbearbeitung bestimmter Oberflächen und das Abdichten bestimmter Stossstellen zwischen diesen beiden Bauteilen. Im Fall eines einstückigen Bauteils entfallen derartige Massnahmen für den Übergangsbereich zwischen dem Luftverteiler 30 und dem Zentralrail 10.

Das Prinzip der Saugrohreinspritzung lässt sich dadurch realisieren, indem aufgrund der Teilebeschaffenheit das Kraftstoff-Luftgemisch im Luftverteiler 30 erzeugt wird, d.h. der oder die Injektoren 40 spritzen den Kraftstoff direkt in den Luftverteiler 30 ein. Ein solches Prinzip wird als Einpunkt-Saugrohreinspritzung bezeichnet. Der Injektor 40 erstreckt sich in diesem Fall durch die beiden separaten aneinander liegenden Wände des Zentralrails 10 und des Luftverteilers 30 bzw. durch die gemeinsame Trennwand dieser beiden Funktionselemente hindurch und die Injektordüse 30 endet in dem Luftverteiler 30, wodurch das Zusammentreffen des Kraftstoffes und der Luft im Luftverteiler 30 erfolgt. Von dort aus kann das Kraftstoff-Luftgemisch in die vorgesehenen Einlasskanäle 52a der Brennräume 2 gelangen.

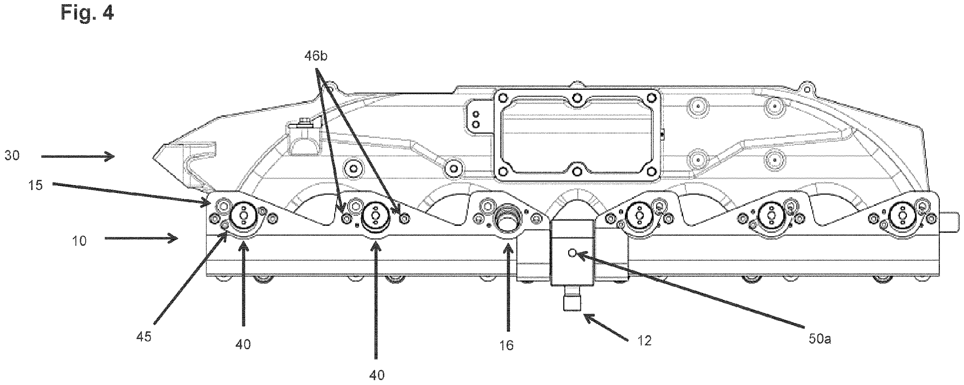

Bei dem Prinzip der Mehrpunkteinspritzung, wie es im Ausführungsbeispiel der Figur 3 vorbereitet und in den Figur 2 und 4 umgesetzt ist, wird der Kraftstoff durch die Injektoren 40 direkt in den jeweiligen Zylinderkopf 52 eingespritzt, insbesondere in den dort vorgesehenen Einlasskanal 52a. Dazu muss sich der Injektor 40 durch die beiden separaten aneinanderliegenden Wände des Zentralrails 10 und des Luftverteilers 30 bzw. durch die gemeinsame Trennwand dieser beiden Funktionselemente erstrecken und sich vorzugsweise über die gesamte Breite des Luftverteilers 30 hindurch erstrecken, sodass die Injektordüse 43 in den bereits im Zylinderkopf 52 vorhandenen Einlasskanal 52a mündet, wodurch das Zusammentreffen des Kraftstoffes und der Luft erst in der unmittelbaren Nähe des Einlassventils resp. Einlass-Ventilpaares erfolgt.

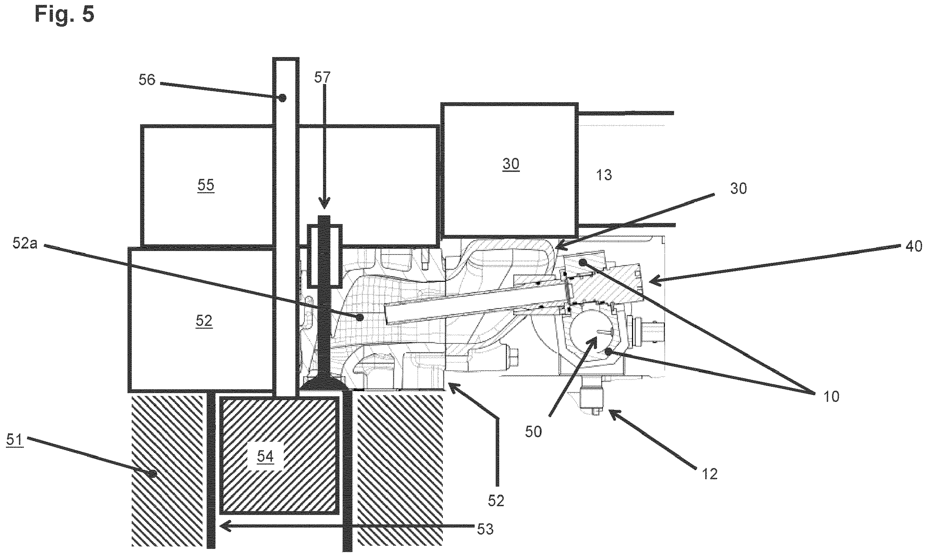

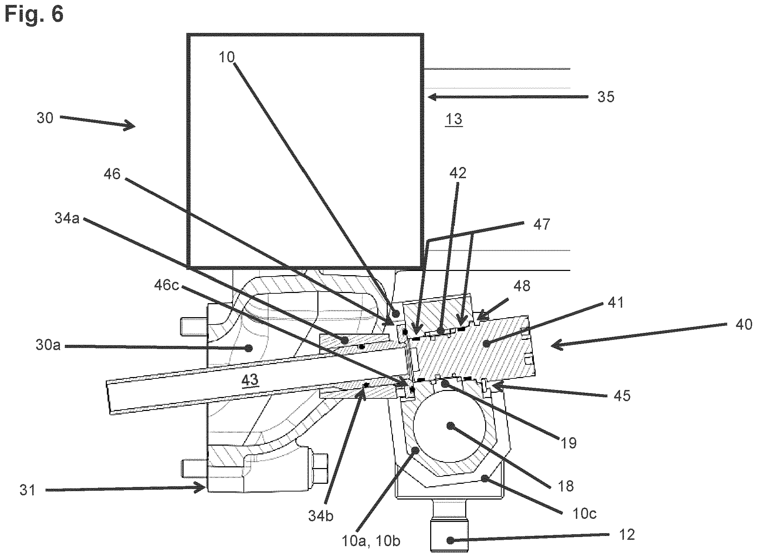

Figur 2 zeigt eine Unteransicht des Luftverteilers 30 mit angebautem Zentralrail 10 und eingesetzten Kraftstoffinjektoren 40. Mittels des Luftverteilers 30 und des Zentralrails 10 werden im gezeigten Ausführungsbeispiel insgesamt sechs Brennräume 2 mit einem Kraftstoff-Luftgemisch versorgt. Der Luftverteiler 30 wird mit der als 31 gekennzeichneten Anlagefläche an den Zylinderkopf 52 einer Verbrennungskraftmaschine angebaut (s. Figur 5), pro Brennraum 2 sind dazu wenigstens zwei Befestigungsschrauben 32 zur Verschraubung mit dem Zylinderkopf 52 vorhanden, die durch die am Luftverteiler 30 angegossenen Hülsen 32a durchgeführt werden. Die Injektordüse 43 wird mittels Montageschrauben 15 am Luftverteiler 30 fixiert. Die einzelnen Kraftstoffinjektoren 40 sind von der vom Luftverteiler 30 abgewandten Seite in das Zentralrail 10 eingebaut und zwar derart, dass sich der, eine Ventilfunktion aufweisende Teilabschnitt 41 des Injektors 40 zumindest teilweise innerhalb des Zentralrails 10 befindet, wobei sich derjenige Längenteilabschnitt des Injektors 40, der die zur Kraftstoffzuleitung in den Injektor 40 dienenden Ringnut 42 aufweist, vollständig innerhalb des Zentralrails 10 befindet (siehe Figur 6). Wie in der Darstellung erkennbar, weist die Injektordüse 43 eine Röhrenform auf, die über das Volumen des Luftverteilers 30 durchgeführt ist. Nach erfolgter Montage mündet die Injektordüse 43 im jeweiligen Einlasskanal 52a des zu versorgenden Brennraums 2, was in der Schnittdarstellung der Figur 5 erkennbar ist. Da für jeden Brennraum 2 ein eigener Injektor 40 zur Verfügung steht, und die Kraftstoffeinspritzung in den Einlasskanal 52a erfolgt, handelt es sich um eine Mehrpunkt-Saugrohreinspritzung. Oberhalb der montierten Injektoren 40 befindet sich der Anschluss 35 mit der Anlagefläche 35a für die Ladeluftzuleitung 13 zum Luftverteiler 30.

Die Schnittansicht der Figur 5 zeigt den Nahbereich des Einlasskanals 52a zu einem Brennraum 2. Es handelt sich um einen Schnitt, der längs der gedachten Längsachse des betrachteten Brennraums 2 abgewinkelt ist. Der freigeschnittene Abschnitt des Zylinderkopfes 52 zeigt den Einlasskanal 52a und weitere Hohlräume, bspw. Kühlräume. Da Letztere nicht im Zusammenhang mit der Erfindung stehen, wird hier auf jegliche Beschreibung verzichtet. Rechtsseitig zum Zylinderkopf 52 ist der Luftverteiler 30 montiert, dessen unterer Teilbereich im gezeigten Schnitt freigelegt ist. Erwartungsgemäss zeigen die beiden, in der Zeichenebene zu erkennenden Innenkonturen des Luftpfades am Übertritt von dem Luftverteiler 30 in den sich im Zylinderkopf 52 befindenden Einlasskanal 52a einen tangentenstetigen Übergang. Der Schnitt ist derart gewählt, dass sich die gedachte Längsachse des Injektors 40 auf der Schnittebene befindet. In Bezug auf den Luftströmungspfad ist der Injektor 40 derart positioniert, dass seine gedachte Längsachse und damit die Strömungsrichtung des injizierten Kraftstoffes in einer dahingehend möglichst vorteilhaften Winkellage in das Strömungsfeld der Luft eintritt,die erwarten lässt oder erwiesenermassen eine sich auf der gemeinsamen Restlaufstrecke längs des Einlasskanals 52a bereits eine weit voranschreitende Vermischung von Kraftstoff und Luft vorliegt.

Die Erfindung beschränkt sich nicht auf fremdgezündete Verbrennungskraftmaschinen. Das Vorhandensein einer Zündkerze 56 beruht lediglich auf dem Ausführungsbeispiel.

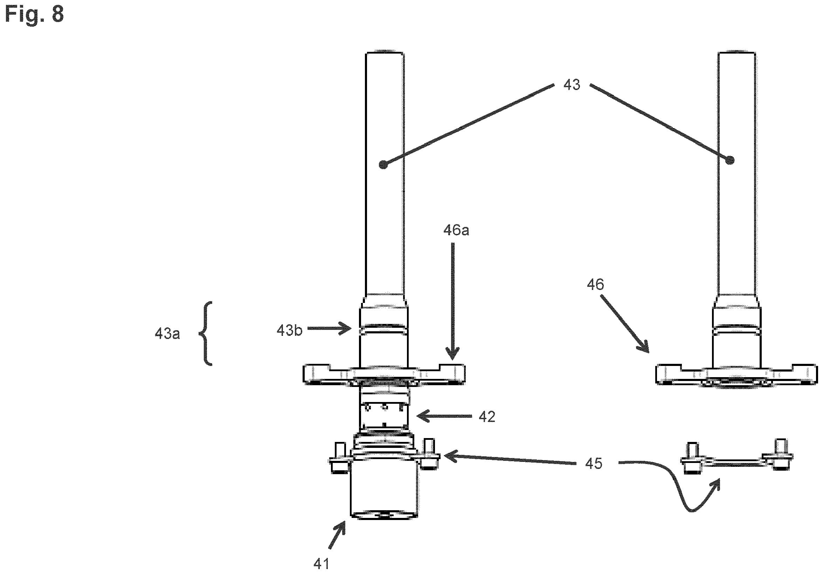

Figur 6 zeigt einen vergrösserten Teilbereich des bereits bekannten Schnitts im Übergangsbereich von dem Zentralrail 10 zu dem Luftverteiler 30. Im Ausführungsbeispiel handelt es sich um einen Injektor 40, der aus zwei Baugruppen besteht, die getrennt voneinander montiert werden und sich im eingebauten Zustand einschliesslich einer Öffnung 16 des Zentralrails 10 auf einer gemeinsamen Längsachse befinden und einen Injektor 40 bilden. Bei dem rechtsseitig angeordneten Bauteil handelt es sich um ein Injektorventil 41, dessen Ausgang sich auf der zum Luftverteiler 30 hingewandten Stirnseite befindet. Die linksseitig angeordnete Injektordüse 43 weist eine Röhrenform auf, an deren zum Injektorventil 41 hingewandten Endabschnitt 43a ein erhöhter Aussendurchmesser vorliegt und an diesem Ende mit einem Flansch ausgestattet ist (siehe Detailansichten des Injektors 40 in Figur 8) und mit einer Abdichtung 43b versehen direkt auf das Zentralrail 10 aufgeschraubt wird.

An demjenigen Endabschnitt 43a einer Injektordüse 43, die den grösseren Aussendurchmesser aufweist, ist eine Trägerplatte 46 angeschweißt. Bohrungen 46a in der Trägerplatte 46 dienen zur Verschraubung mit dem Zentralrail 10. Die dazu notwendigen Schrauben können durch die auf der zugänglichen Oberfläche des Zentralrails 10 vorhandenen Gewindebohrungen 46b (siehe Figur 4) eingesetzt und durch das Zentrailrail 10 bis in die Bohrungen 46a der Trägerplatte 46 durchgeführt werden. Zwischen Zentralrail 10 und Trägerplatte 46 eingebrachte Dichtungselemente 46c sorgen für eine Abdichtung des innerhalb des Zentralrails 10 gespeicherten Brenngases gegenüber der Umgebung.

Ein Teilabschnitt des Injektors 40 ist mit einer Ringnut 42 versehen, die über den Umfang verteilte Radialbohrungen aufweist, wodurch Kraftstoff von der Ringnut 42 über das Injektorventil 41 zur Injektordüse 43 gelangen kann. Zwischen der Ringnut 42 und dem Rail-Innenvolumen 18 besteht eine Fluidverbindung 19 mit einer groß dimensionierten Querschnittsfläche. Dichtungen 47 am Aussenumfang des Injektorventils 41 dienen zur Vermeidung eines Kraftstoff-Austritts an die Umgebung.

An der zum Zentralrail 10 ausgerichteten Seite weist die Wand des Luftverteilers 30 Durchtrittsöffnungen 34 für die Injektoren 40 auf. Im Nahbereich dieser Durchtrittsöffnungen 34 ist das Gehäuse verstärkt, sodass anstelle einfacher Gehäuselöcher jeweils ein Buchsenbereich 34a vorliegt (siehe Figur 3), der eine grossflächige Anlage mit dem Injektor 40 in seinem Endabschnitt 43a des erhöhten Aussendurchmessers bildet, was eine Zentrierung der Injektoren 40 und eine Abdichtung dieser Durchtrittsöffnungen 34 sicherstellt. Der Buchenbereich 34a soll bevorzugt bereits durch das Giessen des Luftverteilers 30 in seiner Rohform erzeugt werden. Die Endfertigung eines solchen Buchsenbereiches 34a beschränkt sich bevorzugt auf eine Nachbearbeitung, mit der eine entsprechende Masshaltigkeit der bereits im Gussrohling vorhandenen Ausnehmungen sichergestellt wird.

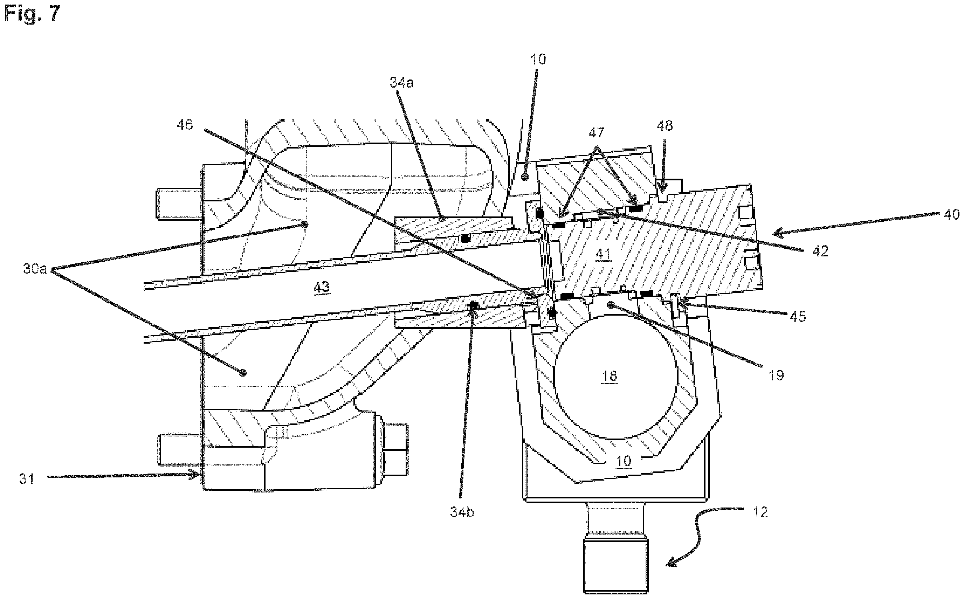

Das Injektorventil 41 ist derart im Zentralrail 10 integriert, dass das Railgehäuse sogar ein Bestandteil des Injektorgehäuses ist (vgl. Figur 7). In der hier gezeigten Ausführungsform befindet sich derjenige die elektrischen Anschlüsse aufweisende Bauteilabschnitt des Injektorventils 41 und damit der elektrische Anteil des Injektors 40 ausserhalb des Luftverteilers 30, wo prinzipiell ein Luft-Gasgemisch vorhanden sein kann. Zwar läge dann im Luftverteiler 30 ein hoher Luftüberschuss vor, aber wenn es sich um einen Wasserstoffmotor handelt, schafft diese räumliche Trennung der Elektrik einen Sicherheitsvorteil, da ein Wasserstoff-Luftgemisch auch bei einem sehr hohen Luftüberschuss zündfähig ist und für das Zünden bereits ein sehr kleiner Energieeintrag bereits ausreichend ist. Die Montage und Demontage des Injektors 40 ist von aussen möglich, indem nur ein Fixierungselement an- bzw. abgeschraubt zu werden braucht (vgl. Figuren 4 und 8). Das Fixierungselement ist als mit dem Railgehäuse anschraubbarer Haltekralle 45 ausgeformt. Eine Halböffnung der Haltekralle 45 ist in eine radiale Aussennut 48 des Injektorgehäuses einsetzbar, wodurch der Injektor 41 am Zentralrail 10 in einer genau festgelegten Position fixierbar ist.

Ein Raildrucksensor 50 (siehe Figur 5) kann im Bereich des Kraftstoffanschlusses 12 in das Zentralrail durch eine Bohrung 50a von aussen eingesetzt werden.

Die erfindungsgemäße Idee lässt sich prinzipiell für alle Verbrennungskraftmaschinen der heutzutage üblichen Topologien einsetzen, dazu zählen bspw. Reihen-, Vund Boxermotoren. Auch ist die Verwendung für selbstzündende und fremdgezündete Verbrennungsmotoren möglich. Das gleiche gilt für 2-Takt, 4-Takt, 2-Ventil, 4 Ventil; Motoren mit oder ohne Aufladung; Motoren mit oder ohne AGR. Auch ist die Anwendung unabhängig von der eingesetzten Kraftstoffart; gleichermaßen für Verbrennungskraftmaschinen einsetzbar, die mit flüssigem oder gasförmigen Kraftstoff betrieben werden. Der Einsatz ist zudem für stationäre und mobile Motoren möglich, d.h. On-road, Off-road, maritime, offshore etc. Sämtliche in diesem Abschnitt aufgezählten Kennzeichnungen verstehen sich als Beispiele, wobei kein Anspruch auf Vollständigkeit besteht und sich daher die Erfindung und dementsprechend die nachfolgend genannten Patentansprüche sich keineswegs auf die hier genannten Motorausführungen beschränkt.

Die Vorteile der Erfindung sollen nachfolgend nochmals kurz zusammengefasst werden:
- Wegfall zahlreicher Rohrleitungen, in denen unter Druck stehender Kraftstoff vom Rail 10 zu den Injektoren 40 geführt ist. Somit reduziert sich der Material- und Herstellungsaufwand für die zu montierenden Bauteile und damit auch der Montageaufwand. Die Reduzierung der Gesamtlänge freiliegender Hochdruckleitungen reduziert das Beschädigungsrisiko sowie die mit einer solchen Beschädigung verbundenen Sekundärrisiken.
- Zwischen dem gemessenen Raildruck und dem tatsächlichen Einspritzdruck im Saugrohr bzw. im Einlasskanal 52a besteht eine wesentlich höhere Übereinstimmung; Druckverluste über Leitungslängen werden reduziert und/oder Laufzeiten für Druckschwankungen verkürzen sich.
- Der erfindungsgemässe Aufbau begünstigt eine kompakte Bauform der Verbrennungskraftmaschine, insbesondere ermöglicht der Aufbau
   o eine gute Zugänglichkeit und eine bequeme Demontage/Montage der Injektoren 40 oder zumindest der Injektorventile 41.
   o eine einfache Wegführung der Kabel für das Bestromen der Injektoren 40 und zur Signalweiterleitung von Sensoren zur Erfassung von Messgrössen am bzw. im Zentralrail 10 und dem Luftverteiler 30.
- Eine Trennung zwischen dem elektrischen Bereich und dem Kraftstoffbereich des Injektors 40 ist naturgemäss gegeben.
- Eine bevorzugte Ausführungsform sieht den Einsatz eines einzigen Bauteils für die Funktionen des Zentralrails 10 und die des Luftverteilers 30 vor, dessen Rohling vorzugsweise als Gussteil hergestellt wird vor. Der Rohling umfasst bereits alle erforderlichen inneren Hohlräume, inneren Verbindungen und die zumindest vorbereiten äusseren Anschlüsse, die letztendlich zur Erfüllung der Funktionen des Luftverteilers 30 und des Zentralrails 10 erforderlich sind. Mit dieser Massnahme entfällt eine separate Fertigung eines weiteren vergleichsweise aufwendigen Gussteils. Hierdurch entfallen bestimmte Ausstattungen für Befestigungen sowie das Verbinden und Abdichten bestimmter Fluidverbindungen. Hervorzuheben ist, dass es sich hierbei um solche Ausstattungen handelt, die eine Nachbearbeitung des Gussteils und das Montieren zusätzlicher Bauteile betrifft.

### Sekundärvorteile

Bekanntermassen weisen entsprechende Rohrleitungen gewisse Toleranzen auf, weil bei deren Herstellung Biegungen auszuführen sind. Aufgrund solcher Toleranzen und der Tatsache, dass bei der Montage einer Verbrennungskraftmaschine mehrere Rohrverbindungen auszuführen sind, ist der Montageaufwand nicht ganz unerheblich. Hinzu kommt das Montieren diverser Fixierungselemente, die benötigt werden, um die freiliegenden Leitungsweiten zu begrenzen, da andernfalls durch das Vibrieren der betriebenen Verbrennungskraftmaschine die Leitungen in entsprechend stark ausgeprägte Schwingungen versetzt werden können. Dies ist ebenso vorteilhaft, weil in bestimmten Anwendungen die Verbrennungskraftmaschine starken Vibrations-, Stoss- und Schockbelastungen ausgesetzt ist; bspw., wenn diese als Primärantrieb einer mobilen Arbeitsmaschine dient.

Sofern entsprechend hohe Sicherheitsanforderungen bestehen bzw. das Austreten von Kraftstoff entsprechend gefährlich wäre, weil es sich bspw. um einen gasförmigen Kraftstoff handelt, müssten die entsprechenden Rohrleitungen und Anschlüsse entsprechend sicherer und damit aufwendiger gestaltet sein, z.B. durch die Verwendung doppelwandiger Rohre etc.

**Bezugszeichenliste:**

| | |
|---|---|
| Zylinderbank | 1 |
| Brennraum | 2 |
| Abgassammler | 3 |
| Zentralrail | 10 |
| Rail-Abschnittsteile | 10a, 10b, 10c |
| Kraftstoffanschluss | 12 |
| Ladeluftzuleitung | 13 |
| Abgas | 14 |
| Montageschraube | 15 |
| Öffnung im Rail | 16 |
| Rail-Innenvolumen | 18 |
| Fluidverbindung | 19 |
| Luftverteiler | 30 |
| Anlagefläche Luftverteiler | 31 |
| Befestigungsschrauben | 32 |
| Hülsen für Befestigungsschrauben | 32a |
| Durchtrittsöffnungen | 34 |
| Buchsenbereich | 34a |
| Dichtung | 34b |
| Anschluss für Ladeluftzuführung | 35 |
| Anlagefläche | 35a |
| Injektor | 40 |
| Injektorventil | 41 |
| Ringnut | 42 |
| Injektordüse | 43 |
| Endabschitt | 43a |
| Ringnut für Dichtung | 43b |
| Fixierungselement | 45 |
| Trägerplatte | 46 |
| Bohrungen | 46a |
| Gewindebohrung | 46b |
| Dichtelemente | 46c |
| Dichtungen | 47 |
| Aussennut | 48 |
| Raildrucksensor | 50 |
| Bohrung | 50a |
| Motorblock | 51 |
| Zylinderkopf | 52 |
| Einlasskanal | 52a |
| Auslasskanal | 52b |
| Laufbuchse | 53 |
| Kolben | 54 |
| Zylinderkopfdeckel | 55 |
| Zündkerze | 56 |

## Patentansprüche

1. Verbrennungskraftmaschine mit Saugrohreinspritzung umfassend mindestens zwei Brennräume (2), wenigstens ein Zentralrail (10) zur Kraftstoffversorgung für die Saugrohreinspritzung und wenigstens einen Luftverteiler (30) für die Luftversorgung der einzelnen Brennräume (2),
**dadurch gekennzeichnet,**
**dass** das Zentralrail (10) am Luftverteiler (30) angebaut ist oder das Zentralrail (10) und der Luftverteiler (30) als einstückiges Bauteil ausgeführt sind.

2. Verbrennungskraftmaschine nach Anspruch 1, **dadurch gekennzeichnet, dass** ein oder mehrere Kraftstoffinjektoren (40) zumindest teilweise in das Zentralrail (10) eingebaut sind, wobei ein ausserhalb des Zentralrails (10) liegender Bestandteil bzw. Bereich des Injektors 40 vorzugsweise akuatorische Komponenten des Injektors (40), insbesondere elektrische Komponenten zur Injektorbetätigung umfasst.

3. Verbrennungskraftmaschine nach Anspruch 2, **dadurch gekennzeichnet, dass** die Längsachse eines im Zentralrail (10) eingebauten Injektors (40) senkrecht zur Längsachse des Zentralrails (10) steht.

4. Verbrennungskraftmaschine nach Anspruch 2 oder 3, **dadurch gekennzeichnet, dass** der vollständige Injektor (40) oder zumindest der sich ausserhalb des Zentralrails (10) befindende Bestandteil bzw. Bereich des Injektors (40) von ausserhalb des Zentralrails (10) demontierbar und entnehmbar ist, wobei jener Bestandteil bzw. Bereich des Injektors 40 vorzugsweise alle akuatorischen Komponenten des Injektors (40), insbesondere alle elektrischen Komponenten bzw. elektrischen Bauteile zur Injektorbetätigung umfasst.

5. Verbrennungskraftmaschine nach Anspruch 4, **dadurch gekennzeichnet, dass** ein Bestandteil bzw. Bereich des Injektors (40) oder der gesamte Injektor (40) durch ein von aussen am Zentralrail (10) zugängliches Fixierungsmittel, insbesondere eine an dem Zentralrail (10) angeschraubte Haltekralle (45), festgelegt ist sowie zum Ein- und/oder Ausbau nur das von aussen zugängliche Fixierungsmittel montiert oder gelöst werden muss.

6. Verbrennungskraftmaschine nach einem der vorstehenden Ansprüche, **dadurch gekennzeichnet, dass** der wenigstens eine Injektor (40) umfangsseitig eine innerhalb des Zentralrails (10) liegende Ringnut (42) mit ein oder mehreren Radialbohrungen zur Fluidverbindung zwischen Zentralrail (10) und Injektor (40) aufweist, wobei vorzugsweise der vom Zentralrail (10) von aussen separierbare Injektorteil (41) die Ringnut (42) aufweist.

7. Verbrennungskraftmaschine nach einem der vorstehenden Ansprüche, **dadurch gekennzeichnet, dass** das Zentralrail (10) und der Luftverteiler (30) zur Ausführung einer Einpunkt- oder Mehrpunkt-Saugrohreinspritzung ausgebildet sind.

8. Verbrennungskraftmaschine nach einem der vorstehenden Ansprüche, **dadurch gekennzeichnet, dass** sich das Zentralrail (10) zumindest teilweise durch den Luftverteiler (30) erstreckt, insbesondere durch das innere Hohlvolumen des Luftverteilers (30) erstreckt.

9. Verbrennungskraftmaschine nach Anspruch 8, **dadurch gekennzeichnet, dass** sich wenigstens ein zur Kraftstoffzuführung ausgeformter Kanal (43), insbesondere die sich durch den Luftverteiler (30) erstreckende Injektordüse (43) umfasst, die sich bevorzugt in den Einlasskanal (52a) des mit Kraftstoff zu versorgenden Brennraums (2) hineinreichend erstreckt.

10. Verbrennungskraftmaschine nach einem der vorstehenden Ansprüche, **dadurch gekennzeichnet, dass** das Zentralrail (10) ein- oder mehrteilig ausgeführt ist, insbesondere in Längsrichtung aus mehreren zusammensetzbaren Rail-Abschnittsteilen (10a, 10b, 10c) besteht.

11. Verbrennungskraftmaschine nach Anspruch 10, **dadurch gekennzeichnet, dass** wenigstens ein Rail-Abschnittsteil (10c) den Kraftstoffanschluss (12) des Zentralrails (10) strömungsaufwärts in die Richtung des Primärkraftstofftanks aufweist, wobei das den Kraftstoffanschluss (12) aufweisende Rail-Abschnittsteil (10c) vorzugsweise mit unterschiedlicher Orientierung des Kraftstoffanschlusses (12) an den übrigen Abschnittsteilen des Zentralrails (10) montierbar ist.

12. Verbrennungskraftmaschine nach einem der vorstehenden Ansprüche, **dadurch gekennzeichnet**, das eine Steuerung vorgesehen und konfiguriert ist, eine sequentielle und bevorzugt zylinderindividuelle Kraftstoffeinspritzung auszuführen.

13. Verbrennungskraftmaschine nach einem der vorstehenden Ansprüche, **dadurch gekennzeichnet, dass** als Primärkraftstoff ein gasförmiger Kraftstoff eingesetzt wird, insbesondere ist die Verbrennungskraftmaschine ein Wasserstoffverbrennungsmotor.
